Europäisches Patentamt

European Patent Office

Office européen des brevets

(11) Publication number: **0 138 626 B1**

(12) **EUROPEAN PATENT SPECIFICATION**

(45) Date of publication of patent specification: **30.12.92**   (51) Int. Cl.⁵: **B60R 13/08**

(21) Application number: **84307194.5**

(22) Date of filing: **18.10.84**

Divisional application 92200687.9 filed on 18/10/84.

(54) **Engine noise control device.**

(30) Priority: **18.10.83 JP 194855/83**

(43) Date of publication of application:
**24.04.85 Bulletin   85/17**

(45) Publication of the grant of the patent:
**30.12.92 Bulletin   92/53**

(84) Designated Contracting States:
**DE FR SE**

(56) References cited:
**EP-A- 0 068 410**
**DE-A- 2 920 278**
**FR-A- 2 312 831**
**FR-A- 2 382 736**
**FR-A- 2 479 324**

(73) Proprietor: **Bridgestone Corporation**
**1-1, Kyobashi 1-Chome Chuo-Ku**
**Tokyo 104(JP)**

(72) Inventor: **Mizuno, Keiichiro**
**827, Kashio-Cho Totsuka-Ku**
**Yokohama City Kanagawa Pref.(JP)**
Inventor: **Iida, Kazuyoshi**
**710, Kamiyabe-Cho Totsuka-Ku**
**Yokohama City Kanagawa Pref.(JP)**
Inventor: **Kondo, Kazuo**
**984-2, Okazu-Cho Totsuka-Ku**
**Yokohama City Kanagawa Pref.(JP)**

(74) Representative: **Whalley, Kevin et al**
**MARKS & CLERK 57/60 Lincoln's Inn Fields**
**London WC2A 3LS(GB)**

Rank Xerox (UK) Business Services

## Description

The present invention relates to an engine noise control device for use in automobiles or the like as a countermeasure against noise pollution, and in particular aims to reduce the engine noise radiated and/or diffracted to the outside from the engine of an automobile.

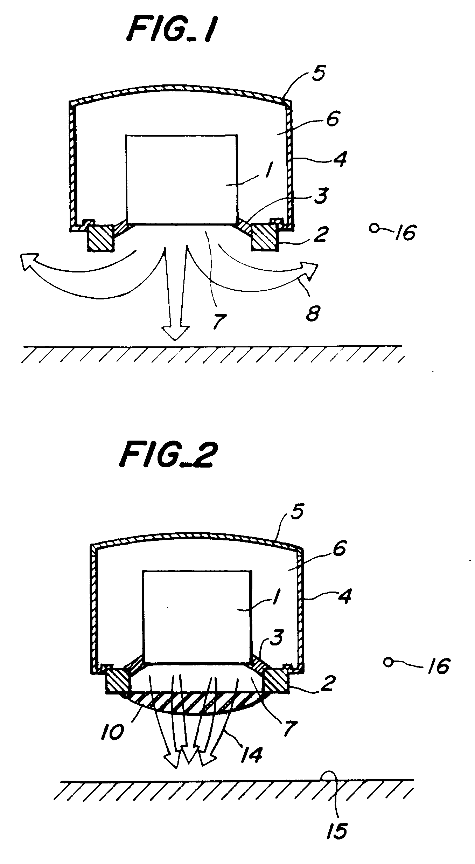

In general, as shown in Figure 1 of the accompanying drawings, which is a diagrammatic vertical sectional view of the engine area of an automobile, an engine 1 of the automobile is fitted onto frame side members 2 through mounts 3, and placed in an engine area 6 defined by a body 4 and a bonnet 5. The engine are 6 is open to the atmosphere through an opening 7 at the bottom portion of the engine area for radiating heat generated from the engine etc. Thus, noises (non-controlled sound waves) generated from the engine 1 are radiated and/or diffracted to the outside from the opening 7 as shown by reference numeral 8, thereby causing problems of noise pollution.

If the engine area opening is completely closed, such engine noise can be reduced to a large extent.

However, since the engine area opening must not be closed for the above-mentioned reason, conventionally a sound absorbing material has merely been attached to the inner surface of the bonnet 5 and the inner wall of the body 4, so that a large noise-reducing effect cannot be obtained.

Attention is also drawn to the disclosures of EP-A-0068410, FR-A-2382736 and FR-A-2312831.

EP-A-0068410 relates to an engine noise reduction device to be fitted below a vehicle engine compartment. The features of the first part of claim 1 are derived from EP-A-0068410. However, the noise reduction device of EP-A-0068410 only deflects sound, but does not reduce sound.

FR-A-2382736 relates to a noise control panel having obliquely arranged conduit passages which decrease outwardly from the central portion of the device. More particularly, FR-A-2382736 relates to a noise control panel which is arranged as a sound barrier wall along, for example, a highway or railroad bed.

FR-A-2312831 relates to devices for controlling propagation of noises which are associated with sound insulating walls to improve the sound reducing effect of alleviating noises emitted from a noise source such as a railroad or highway on which electric cars and automobiles run.

In view of the above, an aim of the present invention is to provide an engine noise control device for use in an automobile or the like, in which the noise-propagating direction is modified or changed by controlling the noise to reduce the energy of sound radiated and/or diffracted to the outside.

The present invention provides an engine noise control device comprising an open portion in a vehicle engine compartment, and a noise control member attached to said open portion of the engine compartment and having a noise entering surface and a noise ejecting surface while being provided with a plurality of hollow conduit passages extending from the noise entering surface to the noise ejecting surface of the noise control member, the hollow conduit passages having a noise controlling effect wherein the conduit passages are obliquely arranged in parallel to one another, characterized in that the hollow conduit passages are so arranged that the length of the conduit passages becomes shorter from a central portion to a peripheral portion thereof, and in that the horizontally sectional profile of said conduit passages is in a lattice fashion.

By means of the present invention the noise radiated from a noise source is controlled in such a direction as to lower the energy of the sound propagating to the outside of the engine area, thereby reducing the noise.

The invention will be further described, by way of example only, with reference to the accompanying drawings, wherein:

Figure 2 is a diagrammatic vertical sectional view of the engine area of an automobile, similar to that in Figure 1 but to which a noise control device according to the present invention is attached;

Figure 3 is a vertical sectional view of a convex lens shape noise control member;

Figure 4 is a perspective view of the convex lens shape noise control member shown in Figure 3;

Figure 5 is a bottom perspective view of another embodiment of a convex lens shape noise control member;

Figures 6-10 are diagrammatic vertical sectional views of engine areas similar to the embodiment in Figure 2 which illustrate other embodiments according to the present invention;

Figures 11-13 are diagrammatic views illustrating various embodiments according to the present invention in which small obstacles are placed in hollow conduit passages;

Figure 14 is a diagrammatic view illustrating an experimental model device; and

Figure 15 is a graph showing experimental results obtained by the experimental model device.

In the drawings, like reference numerals indicate like parts.

Figure 2 shows an embodiment in which a convex lens shape noise control member 10 is attached to frame side members 2 such that the noise control member may be positioned in an engine area opening 7 at the bottom portion of an engine area 6.

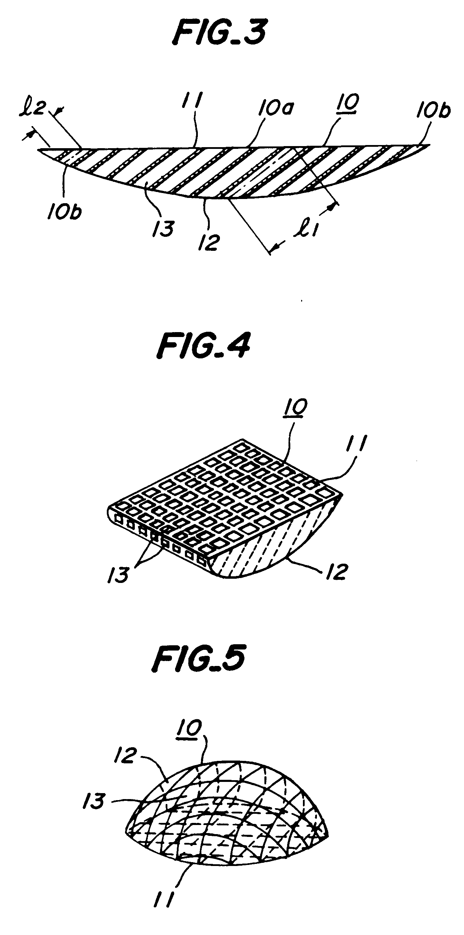

As shown in Figure 3, the convex lens shaped noise control member 10 has a plurality of conduit passages 13 having different conduit passage lengths and extending from the one surface 11 to the other surface 12 of the noise control member, and the conduit passages 13 are arranged parallel to one another such that the conduit passage length becomes shorter from the central portion 10a to the peripheral portion 10b of the noise control member as shown by the conduit passage lengths $\ell_1$ and $\ell_2$.

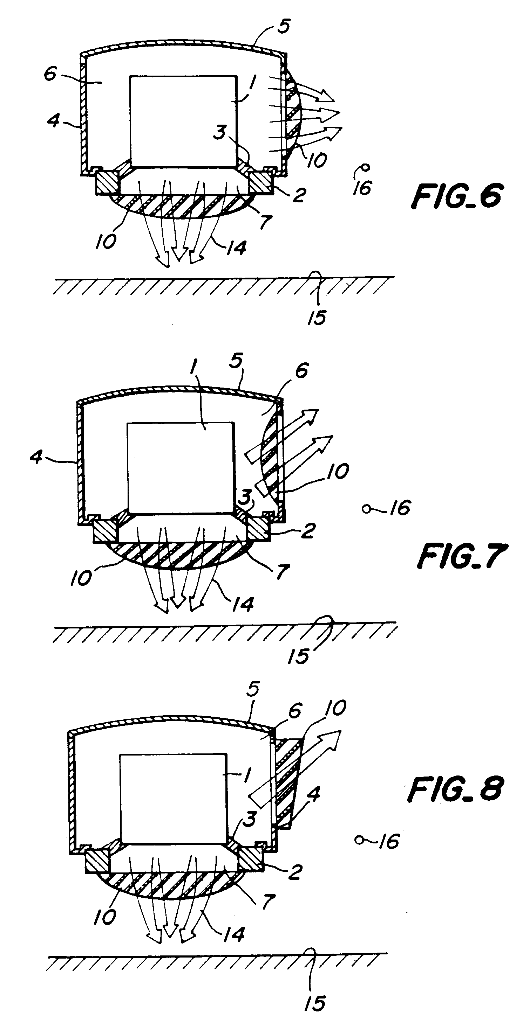

It is preferable that the convex lens shape noise control member 10 is so designed that the one surface 11 is a flat plane and the other surface 12 is a half cylindrical convex lens shape forming an arch, or a semi-circular shape as shown in figure 4, or as shown in Figure 5 the one surface 11 is a flat plane and the other surface 12 is a semi-spherical convex lens shape forming a part of a sphere. Alternatively, the other surface 12 may be shaped as a convex lens other than as shown in the drawings.

When the convex lens shape noise control member thus constituted is attached to the engine area opening 7, the noise generated by the engine etc. in the engine area 6 enters the noise control member 10 from the flat incident surface 11 and passes through the interior of a plurality of the hollow conduit passages 13 having different conduit passage lengths respectively, so that the phases are displaced, and the noise is radiated from the sound wave radiation surface 12 of a convex surface shape. Destructive interference is induced between the controlled sound with the phases thus displaced and the non-controlled and directly propagating sound directly radiated and/or diffracted from the interior of the engine area 6 to the outside through the space or another opening (not shown) present at the engine area opening 7. Consequently, the noise is reduced and directed to the radiation surface 12 of the convex lens shape noise control member 10 toward the ground surface 15 as shown by arrows 14 in Figure 2, so that the energy of the sound is directed to the central portion under the chassis, and the degree at which the noise dissipates to the peripheral portion becomes smaller. Accordingly, the noise level at a position such as a noise-receiving position 16 located at the outside periphery of the engine area 6 can be remarkably lowered, whereas heat generated by the engine, water entering the engine area, or the like can be dissipated or discharged to the outside through the hollow conduit passages 13.

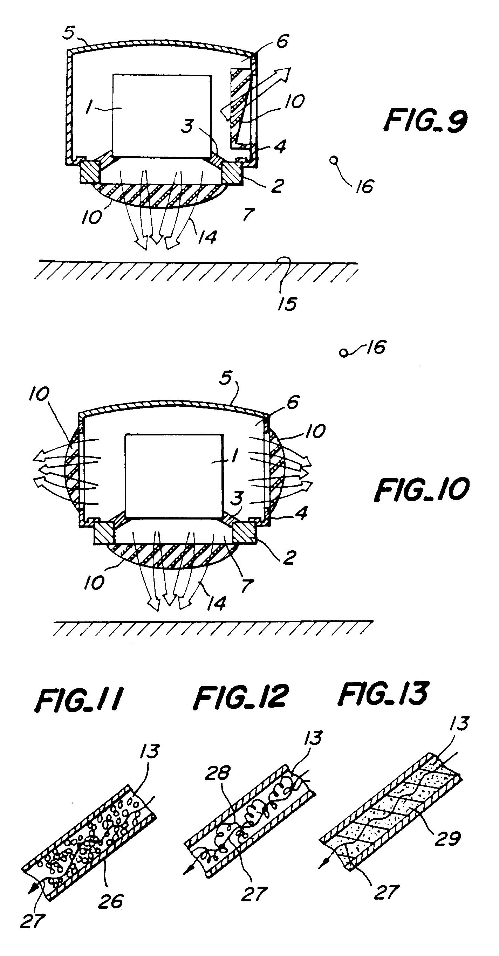

Figures 6 to 10 show various other embodiments according to the present invention in which a convex lens shape or prism shape noise control member 10 is attached to a side body 4 of the engine area 6. By so doing, not only a convex lens shape but also a prism shape may be employed as the noise control member 10 attached to the side body 4. Figures 6 to 10 show noise control members 10 of various shape attached to the inside or the outside of a side 4 of the engine area, or in the case of Figure 10 to two sides of the engine area. As shown in these figures, the noise generated from the engine area 6 can be refracted to a direction other than the sound receiving point as shown by the arrow direction by use of the noise control members 10.

Desired differences in conduit passage length can be obtained even within a restricted thickness by disposing a plurality of small obstacles in the interiors of the hollow conduit passage 13 of the noise control member 10 and increasing the number of the obstacles from the peripheral portion to the central portion 10b.

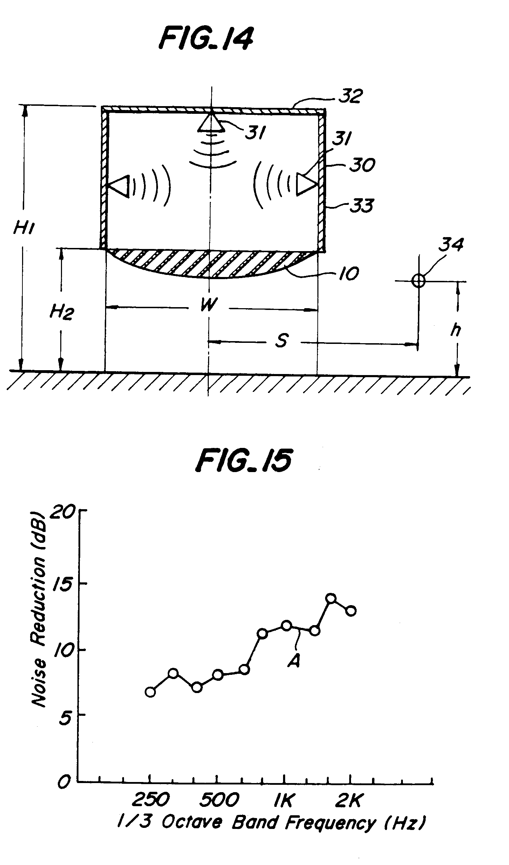

Figures 11-13 show various embodiments in which small obstacles are disposed in the interiors of the hollow conduit passages 13. Figure 11 is an embodiment in which fine particles 26 are charged into hollow conduit passages 13. Figure 12 is an embodiment in which rigid fibrous material 28 is charged into the hollow conduit passages 13. Figure 13 is an embodiment in which a porous material 29 such as ceramic foam is charged to form roundabout space passages 27. By disposing the small obstacles in the hollow passages as mentioned above, the length of sound-propagation paths becomes larger in the case of a thinner noise control member to increase the control performance of the low frequency wave.

As the material constituting the noise control member, any material including metals and polymer materials may be used as long as it has certain sound insulating properties.

The invention will be described more in detail with reference to the following example.

Figure 14 shows a diagrammatic view of an experimental device which was used in a laboratory test by employing an engine area model of an automobile. In the figure, reference numeral 30 is a wood box corresponding to the chassis of the automobile, and reference numerals 31 are sound source speakers producing white noise, which are attached to the interior of a top wall 32 and a side wall 33. A convex lens shape noise control member 10 is fitted to the lower end of the side wall 33. The width W of the wood box 30 was 1,000 mm, the height $H_1$ from the ground surface to the top wall 32 was 1,100 mm and the height $H_2$ from the ground surface to the lower end of the side wall 33 was 500 mm.

A sound receiver (microphone) 34 is disposed at a position a horizontal distance S from the central line of the wood box 30 and a height h from the ground surface, and the white noise was outputted from the speaker 31. The sound pressure level was measured by the microphone 34 with respect to cases where the noise control member was installed or where no noise control member was installed, and the noise reduction effects obtained by the noise control member 10 are as shown in Figure 15. In this figure, A indicates the case in which the noise control member of the embodiment shown in Figure 2 was used.

From the results, it was confirmed that a considerably large noise reduction effect can be obtained from a low frequency to a high frequency by a noise control member according to the present invention.

As mentioned above, the present invention has the effects that noise radiated to the outside from an engine area can be largely reduced, while the heat radiation and water discharge are not interrupted.

## Claims

1. An engine noise control device comprising an open portion (7) in a vehicle engine compartment (6), and a noise control member (10) attached to said open portion of the engine compartment and having a noise entering surface (11) and a noise ejecting surface (12) while being provided with a plurality of hollow conduit passages (13) extending from the noise entering surface to the noise ejecting surface of the noise control member, the hollow conduit passages having a noise controlling effect, wherein the conduit passages are obliquely arranged in parallel to one another, characterized in that the hollow conduit passages are so arranged that the length of the conduit passages becomes shorter from a central portion (10a) to a peripheral portion (10b) thereof, and in that the horizontally sectional profile of said conduit passages, is in a lattice fashion.

2. An engine noise control device as claimed in Claim 1, characterized in that the control member is positioned at the bottom of the engine compartment, so that the sound is directed to the central portion under the chassis.

3. An engine noise control device as claimed in Claim 1 or 2, characterized in that the noise control member is designed in a half cylindrical convex lens shape.

4. An engine noise control device as claimed in Claim 1 or 2, characterized in that the noise control member is designed in a semi-spherical shape.

5. An engine noise control device as claimed in any of Claims 1 to 4, characterized in that small obstacles are disposed in the interiors of the conduit passages.

6. An engine noise control device as claimed in Claim 5, characerized in that the small obstacles are made of fine particles (26), rigid fibrous material (28), or porous material (29).

7. An engine noise control device as claimed in Claim 4 or 5, characterized in that the number of the obstacles is increased from the peripheral portion to the central portion.

8. An engine noise control device as claimed in Claim 4 or 5, characterized in that the obstacles are adapted to enhance the control performance of low frequency wave lengths.

## Patentansprüche

1. Eine Motorengeräusch-Kontrollvorrichtung mit einem offenen Abschnitt (7) in einem Fahrzeugmotorabteil (6) und einem Geräuschkontrollglied (10), das an dem offenen Abschnitt des Motorabteils befestigt ist und eine Geräuscheintrittsfläche (11) sowie eine Geräuschaustrittsfläche (12) hat, während es mit einer Mehrzahl von hohlen Leitungsdurchlässen (13) versehen ist, die von der Geräuscheintrittsfläche zur Geräuschaustrittsfläche des Geräuschkontrollgliedes reichen, einen Geräuschkontrolleffekt haben und schräg parallel zueinander angeordnet sind,
**dadurch gekennzeichnet, daß**
die hohlen Leitungsdurchlässe so angeordnet sind, daß die Länge der Leitungsdurchlässe ausgehend von einem Mittelabschnitt (10a) zu einem Umfangsabschnitt (10b) derselben kürzer wird, und daß das horizontale Querschnittsprofil der Leitungsdurchlässe gitterartig ist.

2. Eine Motorengeräusch-Kontrollvorrichtung nach Anspruch 1, dadurch gekennzeichnet, daß das Kontrollglied an der Unterseite des Motorabteils angeordnet ist, so daß der Schall zum Mittelabschnitt unter dem Chassis gelenkt wird.

3. Eine Motorengeräusch-Kontrollvorrichtung nach Anspruch 1 oder 2, dadurch gekennzeichnet, daß das Geräuschkontrollglied in Gestalt einer halbzylindrischen, konvexen Linse gebaut ist.

4. Eine Motorengeräusch-Kontrollvorrichtung nach Anspruch 1 oder 2, dadurch gekennzeichnet, daß das Geräuschkontrollglied in halbkugeliger Gestalt gebaut ist.

5. Eine Motorengeräusch-Kontrollvorrichtung nach einem der Ansprüche 1 bis 4, dadurch gekennzeichnet, daß im Inneren der Leitungsdurchlässe kleine Hindernisse angeordnet sind.

6. Eine Motorengeräusch-Kontrollvorrichtung nach Anspruch 5, dadurch gekennzeichnet, daß die kleinen Hindernisse aus kleinen Partikel (26), steifem, fasrigen Material (28) oder porösem Material (29) gefertigt sind.

7. Eine Motorengeräusch-Kontrollvorrichtung nach Anspruch 4 oder 5, dadurch gekennzeichnet, daß die Anzahl der Hindernisse vom Umfangsabschnitt zum Mittelabschnitt hin anwächst.

8. Eine Motorengeräusch-Vorrichtung nach Anspruch 4 oder 5, dadurch gekennzeichnet, daß die Hindernisse befähigt sind, die Kontrolleistung von Niederfrequenzwellenlängen zu verbessern.

## Revendications

1. Dispositif de contrôle du bruit produit par le moteur, comprenant une portion ouverte (7) dans un compartiment (6) réservé au moteur du véhicule, ainsi qu'un élément de contrôle du bruit (10) fixé à ladite portion ouverte du compartiment du moteur et possédant une surface (11) par laquelle pénètre le bruit et une surface (12) par laquelle s'évacue le bruit, tout en étant muni de plusieurs passages (13) en forme de conduits creux s'étendant depuis la surface de l'élément de contrôle du bruit, par laquelle pénètre le bruit jusqu'à la surface de l'élément de contrôle du bruit, par laquelle s'évacue le bruit, les passages en forme de conduits creux exerçant un effet de contrôle du bruit, dans lequel les passages en forme de conduits sont disposés en oblique parallèlement l'un à l'autre, caractérisé en ce que les passages en forme de conduits creux sont disposés de telle sorte que la longueur des passages en forme de conduits diminue depuis une portion centrale (10a) jusqu'à une portion périphérique (10b) de ces derniers, et en ce que le profil en coupe horizontale desdits passages en forme de conduits est en forme de treillis.

2. Dispositif de contrôle du bruit produit par le moteur selon la revendication 1, caractérisé en ce que l'élément de contrôle est positionné au fond du compartiment du moteur, si bien que le bruit est dirigé vers la portion centrale en dessous du châssis.

3. Dispositif de contrôle du bruit produit par le moteur selon la revendication 1 ou 2, caractérisé en ce que l'élément de contrôle du bruit est conçu en une forme de demi-lentille cylindrique convexe.

4. Dispositif de contrôle du bruit produit par le moteur selon la revendication 1 ou 2, caractérisé en ce que l'élément de contrôle du bruit est conçu en une forme semi-périphérique.

5. Dispositif de contrôle du bruit produit par le moteur selon l'une quelconque des revendications 1 à 4, caractérisé en ce que de petits obstacles sont disposés à l'intérieur des passages en forme de conduits.

6. Dispositif de contrôle du bruit produit par le moteur selon la revendication 5, caractérisé en ce que les petits obstacles sont réalisés en fines particules (26), en une matière fibreuse rigide (28) ou en une matière poreuse (29).

7. Dispositif de contrôle du bruit produit par le moteur selon la revendication 4 ou 5, caractérisé en ce que le nombre des obstacles augmente depuis la portion périphérique jusqu'à la portion centrale.

8. Dispositif de contrôle du bruit produit par le moteur selon la revendication 4 ou 5, caractérisé en ce que les obstacles sont conçus pour augmenter la performance de contrôle des ondes basse fréquence.

## FIG.1

## FIG.2

## FIG.3

## FIG.4

## FIG.5

FIG_6

FIG_7

FIG_8

FIG.9

FIG.10

FIG.11    FIG.12    FIG.13

# FIG. 14

# FIG. 15